# FASCICULE DE BREVET EUROPEEN

(11) **EP 3 508 384 B1**
(45) Date de publication et mention de la délivrance du brevet: **01.04.2020**
(21) Numéro de dépôt: 18211876.0
(22) Date de dépôt: 12.12.2018
(51) Int. Cl.: B60R 9/10, B60R 9/06

(54) **PORTE-VELO AMOVIBLE**
ABNEHMBARER FAHRRADTRÄGER
REMOVABLE BICYCLE CARRIER

(30) Priorité: 08.01.2018 FR 1850140
(43) Date de publication de la demande: 10.07.2019
(73) Titulaire: Etablissements Mottez & Cie, 59193 Erquinghem-Lys (FR)
(72) Inventeur: MOTTEZ, Frédéric, 59000 LILLE (FR)
(74) Mandataire: Bureau Duthoit Legros Associés

(56) Documents cités:
- WO-A1-2009/158684
- WO-A1-2011/063254
- FR-A1- 2 755 923
- US-A1- 2014 125 045

## Description

La présente invention est relative à un porte-vélo amovible destiné être fixé au hayon d'un véhicule automobile.

L'invention concerne également un procédé d'installation d'un tel porte-vélo sur le hayon d'un véhicule automobile.

L'invention concerne encore un ensemble comprenant un porte-vélo selon l'invention ainsi qu'un hayon de véhicule automobile.

Le domaine de l'invention est celui des portes-vélos amovibles, destinés à être fixés au hayon d'un véhicule automobile. De tels porte-vélos amovibles sont configurés pour le transport d'au moins un vélo.

De façon bien connue, par exemple du document WO 201163254 A1, et comme visible sur la figure 1, représentant cet état de la technique, un tel porte vélo amovible comporte généralement un châssis rigide, formé par exemple d'un ou plusieurs tubes métalliques, comprenant une première portion et une deuxième portion articulées l'une par rapport à l'autre selon un axe de pivotement. La première et la deuxième portion sont configurées de sorte à venir appuyer contre une paroi, sensiblement plane, du hayon d'un véhicule automobile, avantageusement par l'intermédiaire de tampons en mousse, afin de ne pas détériorer ledit hayon du véhicule. Au moins deux bras parallèles sont fixés au châssis dudit porte-vélo et sont configurés de sorte à faire saillie vers l'extérieur du véhicule, une fois le porte-vélo fixé audit hayon.

Selon cet état de la technique, afin d'assurer le maintien en position du porte-vélo sur le hayon, il est prévu une pluralité de sangles de maintien, de longueur réglable, configurées pour relier le châssis rigide du porte vélo au hayon du véhicule. Le porte-vélo comporte ainsi trois paires de sangles :
- une première paire, dont les deux sangles sont destinées à s'étendre sensiblement parallèlement, fixées au châssis rigide au niveau d'une première extrémité de chacune desdites sangles, et configurées pour se fixer sur le chant supérieur dudit hayon, par l'intermédiaire de crochets, ménagés au niveau d'une deuxième extrémité de chacune desdites sangles, venant enserrer ledit chant supérieur,
- une deuxième paire, dont les deux sangles sont destinées à s'étendre sensiblement parallèlement, fixées au châssis rigide au niveau d'une première extrémité de chacune desdites sangles, et configurées pour se fixer sur le chant inférieur dudit hayon, par l'intermédiaire de crochets venant enserrer ledit chant inférieur,
- une troisième paire, dont les deux sangles sont destinées à s'étendre sensiblement transversalement au hayon du véhicule, de part et d'autre du châssis rigide du porte-vélo, fixées au châssis rigide au niveau d'une première extrémité de chacune desdites sangles, et configurées pour se fixer sur les chants latéraux dudit hayon, par l'intermédiaire de crochets venant enserrer lesdits chants latéraux.

La première paire de sangles et la deuxième paire de sangles assurent le maintien du porte-vélo sur le hayon selon une direction longitudinale du hayon, la troisième paire de sangles assurant le maintien latéral du porte-vélo sur le hayon du véhicule selon une direction transversale du hayon.

Ainsi, après que le châssis rigide du porte-vélo a été mis en appui sur le hayon du véhicule, et que les crochets des sangles ont été positionnés sur les chants du hayon, les sangles sont mises en tension, par un système de réglage de la longueur des sangles afin d'assurer le maintien en position du châssis rigide sur le hayon du véhicule.

Un tel porte-vélo amovible présente notamment l'inconvénient majeur de ne pas pouvoir s'adapter à une grande variété de véhicules automobiles. Plus particulièrement, un tel porte-vélo amovible n'est pas configuré pour se fixer sur le hayon d'un véhicule dont les phares arrière sont ménagés d'un seul tenant sur le hayon du véhicule. En effet, sur de tels véhicules, les phares arrières sont généralement placés dans une zone correspondant à la zone de fixation des sangles du porte-vélo, permettant d'assurer une stabilité optimale du porte-vélo sur le hayon du véhicule. Or, l'épaisseur ou la configuration du hayon au niveau desdits phares empêche la fixation des crochets sur les chants du hayon.

Dans un tel cas, la troisième paire de sangles ne peut être fixée correctement au hayon, privant le porte-vélo de maintien latéral.

Par ailleurs, un tel porte-vélo amovible se révèle peu adapté dans le cas où le hayon est réalisé, au moins partiellement, en matériau plastique, l'emploi de crochets tels que décrits ci-dessus détériorant rapidement les éléments en plastique.

L'invention propose de pallier à ces inconvénients en proposant un porte-vélo amovible destiné à être fixé au hayon d'un véhicule automobile, apte à être fixé rapidement, et de façon simple, au hayon d'une grande variété de véhicules automobiles, et garantissant une grande stabilité au porte-vélo sur le hayon du véhicule automobile, plus particulièrement selon la direction transversale du hayon quelle que soit la forme et la configuration dudit hayon, et notamment dans le cas où les phares arrières sont ménagés d'un seul tenant sur ledit hayon, ou dans le cas où le hayon est réalisé, au moins partiellement, en plastique.

D'autres buts et avantages de l'invention apparaîtront au cours de la description qui va suivre qui n'est donnée qu'à titre indicatif et qui n'a pas pour but de la limiter.

Aussi, l'invention concerne un porte-vélo amovible destiné à être fixé au hayon d'un véhicule automobile comprenant :
- un châssis rigide destiné à venir s'appuyer sur le hayon d'un véhicule automobile,
- deux bras de support des vélos, parallèles entre eux, fixés au châssis rigide de sorte à faire saillie vers l'extérieur du véhicule automobile, une fois le porte-vélo amovible fixé sur le hayon du véhicule automobile,
- des moyens de maintien longitudinal, assurant le maintien du châssis rigide sur le hayon du véhicule automobile selon une direction longitudinale du hayon du véhicule automobile,
- un moyen de maintien transversal assurant le maintien du châssis rigide sur le hayon du véhicule automobile selon une direction transversale du hayon du véhicule automobile.

Selon l'invention, ledit moyen de maintien transversal comprend :
- une sangle transversale, de longueur réglable, dont chacune des deux extrémités est fixée au châssis rigide de part et d'autre du châssis rigide, destinée à s'étendre, au moins partiellement, sensiblement parallèlement à une direction transversale du hayon du véhicule automobile à l'intérieur du véhicule automobile, et à appuyer contre une face intérieure du hayon du véhicule automobile, et
- deux éléments d'appui, montés coulissant sur la sangle transversale, et deux moyens de butée mobiles permettant d'empêcher le coulissement de chacun desdits éléments d'appui sur la sangle transversale selon au moins une direction, lesdits éléments d'appui étant configurés pour venir appuyer contre une face extérieure du hayon du véhicule automobile, à proximité de chacune des extrémités latérales du hayon du véhicule automobile, lorsque le porte-vélo amovible est fixé audit hayon du véhicule automobile, afin d'assurer le maintien latéral du châssis.

Selon des caractéristiques optionnelles de l'invention prises seules ou en combinaison :
- Les moyens de maintien longitudinal comprennent deux paires de sangles de maintien, de longueur réglable, présentant :
   - une première paire, dont les deux sangles sont destinées à s'étendre sensiblement parallèlement, sont fixées au châssis rigide au niveau d'une première extrémité de chacune desdites sangles, et sont configurées pour se fixer sur le véhicule automobile, à proximité de l'extrémité supérieure du hayon, au niveau d'une deuxième extrémité de chacune desdites sangles,
   - une deuxième paire, dont les deux sangles sont destinées à s'étendre sensiblement parallèlement, sont fixées au châssis rigide au niveau d'une première extrémité de chacune desdites sangles, et sont configurées pour se fixer sur le véhicule automobile, à proximité de l'extrémité inférieure du hayon, au niveau d'une deuxième extrémité de chacune desdites sangles.
- Un crochet est fixé sur au moins une sangle de la première/deuxième paire de sangles, au niveau de la deuxième extrémité de ladite sangle, afin d'assurer la fixation de ladite sangle au véhicule automobile.
- Au moins un élément d'appui est un diabolo comprenant un cylindre, sur lequel est ménagée une fente longitudinale destinée être traversée par la sangle transversale en coulissement, ainsi que deux patins souple, fixés à chacune des extrémités du cylindre.
- Au moins un moyen de butée mobile comporte :
   - une portion de réception configurée pour recevoir en appui la sangle transversale,
   - une came de serrage, monté pivotante sur ladite portion de réception, ladite came de serrage pouvant passer d'une première position, dans laquelle le moyen de butée mobile est fixé immobile sur la sangle transversale à une deuxième position, dans laquelle le moyen de butée mobile peut coulisser sur la sangle transversale.

L'invention concerne également un procédé d'installation d'un porte-vélo amovible selon l'invention sur le hayon d'un véhicule automobile, comprenant les étapes :
(a) mise en place de la sangle transversale à l'intérieur du véhicule automobile,
(b) mise en place des éléments d'appui à proximité de chacune des extrémités latérales du hayon du véhicule automobile, et maintien en position desdits éléments d'appui par l'intermédiaire des moyens de butée amovibles,
(c) fixation de chacune des extrémités de ladite sangle transversale au châssis rigide du porte-vélo amovible,
(d) réglage de la longueur de la sangle transversale et ajustement de la position des éléments d'appui et des moyens de butée amovible de sorte que la sangle transversale appuie contre une face intérieure du hayon du véhicule automobile, et que les éléments d'appui appuient contre une face extérieure du hayon du véhicule automobile, à proximité des extrémités latérales dudit hayon, afin que le châssis rigide du porte-vélo amovible soit maintenu en appui sur le hayon du véhicule automobile, selon une direction sensiblement transversale dudit hayon du véhicule automobile.

Selon un mode de réalisation, le procédé comprend les étapes :
(e) fixation de la deuxième extrémité de chaque sangle de la première paire de sangles sur le véhicule automobile, à proximité de l'extrémité supérieure du hayon,
(f) fixation de la deuxième extrémité de chaque sangle de la deuxième paire de sangles sur le véhicule automobile, à proximité de l'extrémité inférieure du hayon,
(g) fixation de la première extrémité de chaque sangle de la première paire de sangles sur le châssis rigide;
(h) fixation de la première extrémité de chaque sangle de la deuxième paire de sangles sur le châssis rigide;
(i) ajustement de la longueur de toutes les sangles de sorte que le porte-vélo amovible se retrouve plaqué et maintenu en appui sur le hayon du véhicule automobile, selon une direction longitudinale du hayon du véhicule automobile.

Selon un mode de réalisation, au cours de l'étape (e), un crochet fixé au niveau de la deuxième extrémité d'au moins une sangle de la première paire de sangles vient se fixer sur le chant supérieur dudit hayon, ledit crochet venant enserrer ledit chant supérieur du hayon,
et/ou,
au cours de l'étape (f), un crochet, fixé au niveau de la deuxième extrémité d'au moins une sangle de la deuxième paire de sangles, vient se fixer sur le chant inférieur dudit hayon, ledit crochet venant enserrer ledit chant supérieur du hayon,
et/ou,
au cours de l'étape (f), un crochet fixé au niveau de la deuxième extrémité d'au moins une sangle de la deuxième paire de sangles vient se fixer dans un logement ménagé sous la caisse du véhicule automobile.

Selon un mode de réalisation, au cours de l'étape (e), la deuxième extrémité d'au moins une sangle de la première paire de sangles est fixée sur une barre de toit ménagée sur le toit du véhicule automobile.

L'invention concerne encore un ensemble comprenant un véhicule automobile muni d'un hayon et un porte-vélo amovible selon l'invention, ledit porte-vélo amovible étant fixé au hayon du véhicule automobile.

La sangle transversale de longueur réglable est fixée au châssis rigide par chacune de ses deux extrémités, de part et d'autre du châssis rigide, s'étendant, au moins partiellement, sensiblement parallèlement à une direction transversale du hayon du véhicule automobile à l'intérieur du véhicule automobile, et en appuyant contre une face intérieure du hayon du véhicule automobile, et les deux éléments d'appui montés coulissant sur la sangle transversale sont bloqués par les deux moyens de butée mobiles, bloquant le coulissement de chacun desdits éléments d'appui sur la sangle transversale selon au moins une direction, lesdits éléments d'appui appuyant contre une face extérieure du hayon du véhicule automobile, à proximité de chacune des extrémités latérales du hayon du véhicule automobile, lorsque le porte-vélo amovible est fixé audit hayon du véhicule automobile, assurant le maintien latéral du châssis sur le hayon.

L'invention sera mieux comprise à la lecture de la description suivante accompagnée des figures en annexe parmi lesquelles :
- La figure 1 est une vue en perspective d'un porte-vélo amovible conforme à l'invention,
- La figure 2 est une vue de détail en perspective d'une sangle transversale d'un porte-vélo amovible conforme à l'invention,
- La figure 3 est une vue en perspective de l'arrière d'un véhicule automobile montrant le positionnement de la sangle transversale d'un porte-vélo amovible conforme à l'invention par rapport au hayon du véhicule,
- La figure 4 est une vue de l'arrière d'un véhicule automobile présentant un hayon sur lequel est fixé un porte-vélo amovible conforme à l'invention,
- La figure 5 est une vue en perspective du véhicule automobile de la figure 4,
- La figure 6a est une vue en perspective de l'arrière d'un véhicule automobile présentant un hayon sur lequel sont fixées la sangle transversale et les sangles de la première paire de sangles d'un porte-vélo amovible conforme à l'invention,
- La figure 6b est une vue en perspective de l'arrière d'un véhicule automobile présentant un hayon sur lequel est fixée la sangle transversale et un toit comprenant deux barres de toit, auxquelles sont fixées les sangles de la première paire de sangles d'un porte-vélo amovible conforme à l'invention,
- La figure 7a est une vue de dessous d'un véhicule automobile présentant un hayon sur lequel est fixé un porte-vélo amovible conforme à l'invention, les sangles de la deuxième paire de sangles étant munies d'un crochet, fixé au niveau de la deuxième extrémité desdites sangles, reçu dans un logement ménagé sous la caisse du véhicule automobile,
- La figure 7b est une vue en perspective de l'arrière d'un véhicule automobile présentant un hayon sur lequel est fixé un porte-vélo amovible conforme à l'invention,
- La figure 8a est une vue de détail d'un moyen de butée mobile d'un porte-vélo amovible conforme à l'invention recevant une sangle transversale dudit porte-vélo amovible, ladite came de serrage se trouvant dans une première position, dans laquelle le moyen de butée mobile est fixé immobile sur la sangle transversale,
- La figure 8b est une vue similaire à celle de la figure 8a, ladite came de serrage se trouvant dans une deuxième position, dans laquelle le moyen de butée mobile peut coulisser sur la sangle transversale,
- La figure 9 est une vue de détail d'un élément d'appui d'un porte-vélo amovible conforme à l'invention.

L'invention concerne un porte-vélo amovible 1 destiné à être fixé au hayon H d'un véhicule automobile V comprenant :
- un châssis 10, rigide, destiné à venir s'appuyer sur le hayon H d'un véhicule automobile V,
- deux bras de support 11 des vélos, parallèles entre eux, fixés au châssis rigide 10 de sorte à faire saillie vers l'extérieur du véhicule automobile V, une fois le porte-vélo amovible 1 fixé sur le hayon H du véhicule automobile V,
- des moyens de maintien longitudinal 2, assurant le maintien du châssis rigide 10 sur le hayon H du véhicule automobile V selon une direction longitudinale DL du hayon H du véhicule automobile V,
- un moyen de maintien transversal 3 assurant le maintien du châssis rigide 10 sur le hayon H du véhicule automobile V selon une direction transversale DT du hayon H du véhicule automobile V,

Selon l'invention, ledit moyen de maintien transversal 3 comprend :
- une sangle transversale 31, de longueur réglable, dont chacune des deux extrémités E31, E31' est fixée au châssis rigide 10 de part et d'autre du châssis rigide 10, destinée à s'étendre, au moins partiellement, sensiblement parallèlement à une direction transversale DT du hayon H du véhicule automobile V à l'intérieur du véhicule automobile V, et à appuyer contre une face intérieure FI du hayon H du véhicule automobile, et
- deux éléments d'appui 32, montés coulissant sur la sangle transversale 31, et deux moyens de butée mobiles 33 permettant d'empêcher le coulissement de chacun desdits éléments d'appui 32 sur la sangle transversale 31 selon au moins une direction, lesdits éléments d'appui 32 étant configurés pour venir appuyer contre une face extérieure FE du hayon H du véhicule automobile V, à proximité de chacune des extrémités latérales EL, EL' du hayon H du véhicule automobile V, lorsque le porte-vélo amovible 1 est fixé audit hayon H du véhicule automobile V.

Un tel moyen de maintien transversal 3 va permettre d'assurer un maintien latéral optimal du porte-vélo amovible 1 sur le hayon H du véhicule automobile V, selon une direction transversale DT dudit hayon H, quelle que soit la forme et la configuration dudit hayon H, notamment la position des éventuels phares arrières sur ledit hayon H.

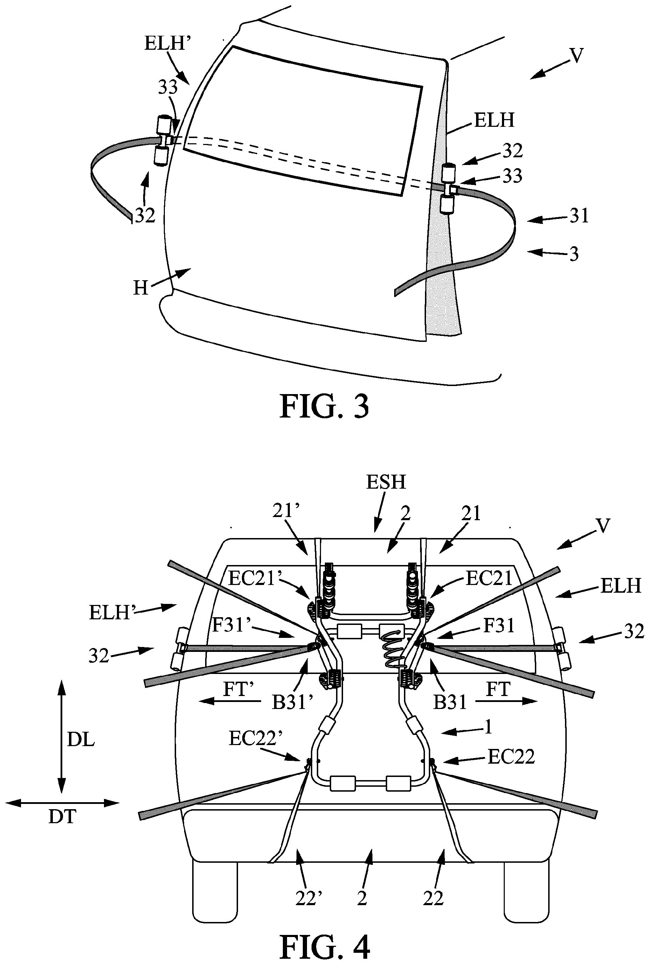

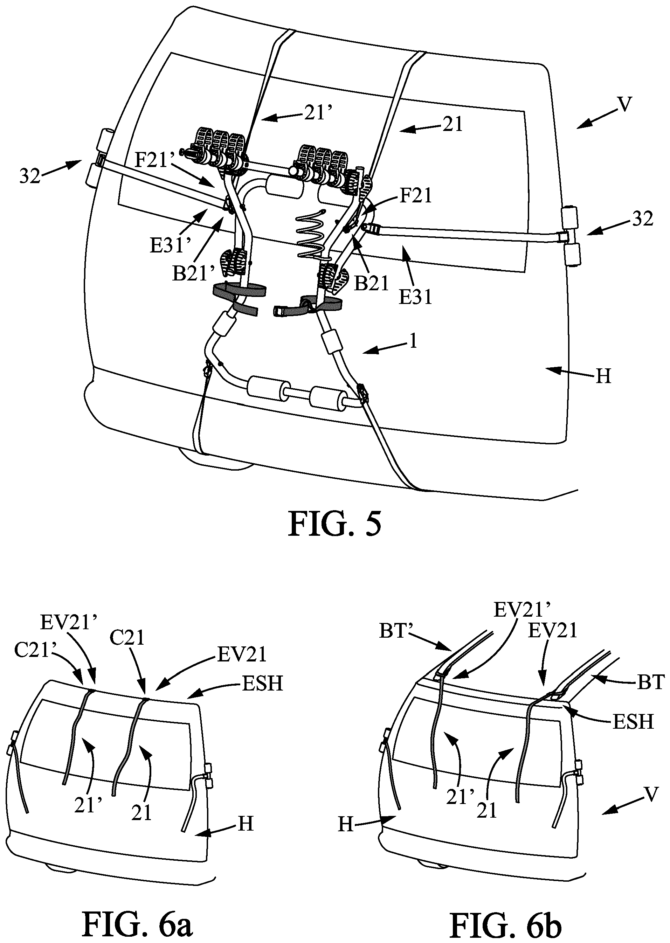

En effet, comme visible sur les exemples de réalisation des figures 4 et 5, chaque élément d'appui 32 est maintenu sensiblement immobile par rapport au hayon H, en appui sur ledit hayon H, selon un premier sens par la butée exercée par la face extérieure FE du hayon H, lorsque le hayon H est fermé, et selon un deuxième sens par le moyen de butée mobile 33.

Ainsi, quelle que soit la forme du hayon H, les éléments d'appui 32 seront maintenus en appui contre la face extérieure FE du hayon H, afin d'assurer un maintien optimal du châssis rigide 10 sur le hayon H.

De plus, une première extrémité E31 de la sangle transversale 31 est fixée sur le châssis rigide 10 au niveau d'un premier point de fixation F31, prévu pour se trouver du côté d'une première extrémité latérale ELH et une deuxième extrémité E31' de la sangle transversale 31 est fixée au châssis rigide 10 au niveau d'un deuxième point de fixation F31', prévu pour se trouver du côté d'une deuxième extrémité latérale ELH'.

La longueur de la sangle transversale 31 est prévue pour être ajustée de sorte que le châssis rigide 10 se retrouve plaqué en appui contre une face extérieure FE du hayon H, et que les éléments d'appui se retrouvent plaqués contre la face extérieure FE du hayon H au niveau de chacune des extrémités latérales ELH, ELH' du hayon H.

A cet effet, une boucle de réglage B31, B31' peut être prévue sur le châssis rigide 10 au niveau de chaque point de fixation F31, F31'.

Ainsi, si le châssis rigide 10 subit un effort transversal FT, orienté sensiblement selon la direction transversale DT du hayon, dans le sens du premier point de fixation F31 vers la première extrémité latérale ELH, le déplacement transversal du châssis rigide 10 par rapport au hayon H va être empêché par l'élément d'appui 32 venant appuyer sur la face extérieure FE du hayon H au niveau de la deuxième extrémité latérale ELH'.

Inversement, si le châssis rigide 10 subit un effort transversal FT', orienté sensiblement selon la direction transversale DT du hayon, dans le sens du deuxième point de fixation F31' vers la deuxième extrémité latérale ELH', le déplacement transversal du châssis rigide 10 par rapport au hayon H va être empêché par l'élément d'appui 32 venant appuyer sur la face extérieure FE du hayon H au niveau de la première extrémité latérale ELH.

Avantageusement, le châssis rigide 10 peut être réalisé en plusieurs parties 11, 12, 13, chacune desdites parties étant par exemple réalisée à partir d'un tube métallique plié à la forme souhaitée.

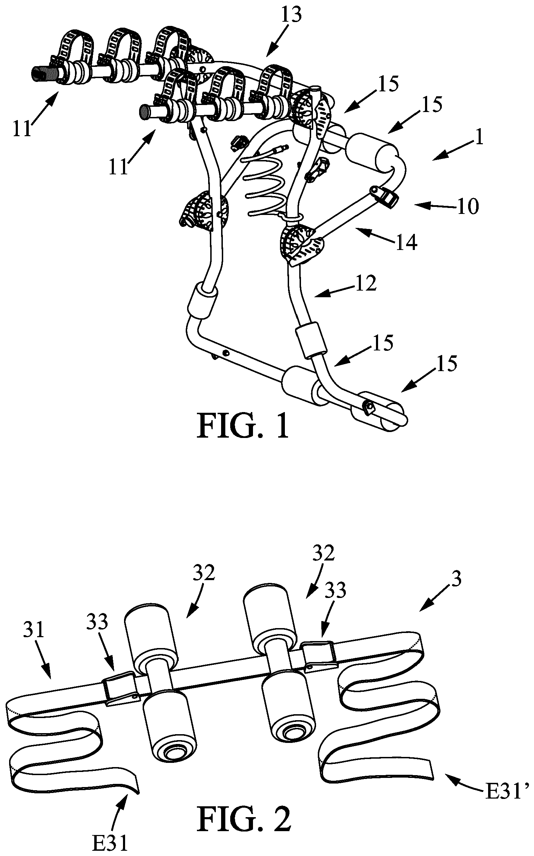

Ainsi, et comme visible sur l'exemple de réalisation de la figure 1, il peut être prévu une armature centrale 12 sur laquelle sont fixées, mobiles en rotation, une première partie de châssis 13, sur laquelle sont ménagés les deux bras de support 11 des vélos, et une deuxième partie de châssis 14, permettant de régler l'inclinaison de l'armature centrale 12 par rapport au hayon H du véhicule automobile V.

Des patins souples 15, par exemple en mousse polymère, peuvent être prévus au niveau des points du châssis rigide 10 prévus pour venir appuyer contre la face externe FE du hayon H, afin d'éviter de détériorer le hayon H.

Selon un mode de réalisation, les moyens de maintien longitudinal 2 comprennent deux paires de sangles de maintien 21, 21' ; 22, 22' de longueur réglable, présentant :
- une première paire 21, 21', dont les deux sangles 21, 21' sont destinées à s'étendre sensiblement parallèlement, sont fixées au châssis rigide 10 au niveau d'une première extrémité EC21, EC21', de chacune desdites sangles 21, 21', et sont configurées pour se fixer sur le véhicule automobile V, à proximité de l'extrémité supérieure ESH du hayon H, au niveau d'une deuxième extrémité EV21, EV21' de chacune desdites sangles 21, 21',
- une deuxième paire 22, 22', dont les deux sangles 22, 22' sont destinées à s'étendre sensiblement parallèlement, sont fixées au châssis rigide 10 au niveau d'une première extrémité EC22, EC22' de chacune desdites sangles 22, 22', et et sont configurées pour se fixer sur le véhicule automobile V, à proximité de l'extrémité inférieure EIH du hayon H, au niveau d'une deuxième extrémité EV22, EV22' de chacune desdites sangles 22, 22'.

Comme visible sur les exemples de réalisation des figures 4 et 5, chacune des premières extrémités EC21, EC21', EC22, EC22' de chacune desdites sangles 21, 21', 22, 22' peut être fixée au niveau d'un point de fixation F21, F21', F22, F22' sur le châssis rigide 10, notamment par l'intermédiaire d'une boucle de réglage B21, B21, B22, B22', fixée sur ledit châssis rigide, permettant d'ajuster la longueur desdites sangles 21, 21', 22, 22'.

Chaque deuxième extrémité EV21, EV21', EV22, EV22' de chaque sangle 21, 21', 22, 22' peut être munie d'un moyen d'accrochage, par exemple sous la forme d'un crochet, ou en être dépourvu, afin de se fixer au véhicule V, et ce selon la partie du véhicule V à laquelle est destinée à venir se fixer ladite deuxième extrémité EV21, EV21', EV22, EV22' de la sangle 21, 21', 22, 22'.

Par exemple, comme visible sur l'exemple de réalisation de la figure 6a, la deuxième extrémité EV21, EV21' de chaque sangle 21, 21' de la première paire de sangles peut être munie d'un crochet C21, C21', configuré de sorte à venir enserrer le chant supérieur du hayon H.

Alternativement, comme visible sur l'exemple de réalisation de la figure 6b, la deuxième extrémité EV21, EV21' de chaque sangle 21, 21' de la première paire de sangles peut être dépourvue de crochet, de sorte à pouvoir être attachée à une barre de toit BT, BT', par exemple par l'intermédiaire d'un nœud coulant réalisé au niveau de la deuxième extrémité EV21, EV21' de chaque sangle 21, 21'. Ce mode de réalisation peut être privilégié dans le cas où l'extrémité supérieure ESH du hayon H est réalisée en plastique, et risquerait de se détériorer avec l'emploi d'un crochet C21, C21', tel que décrit précédemment.

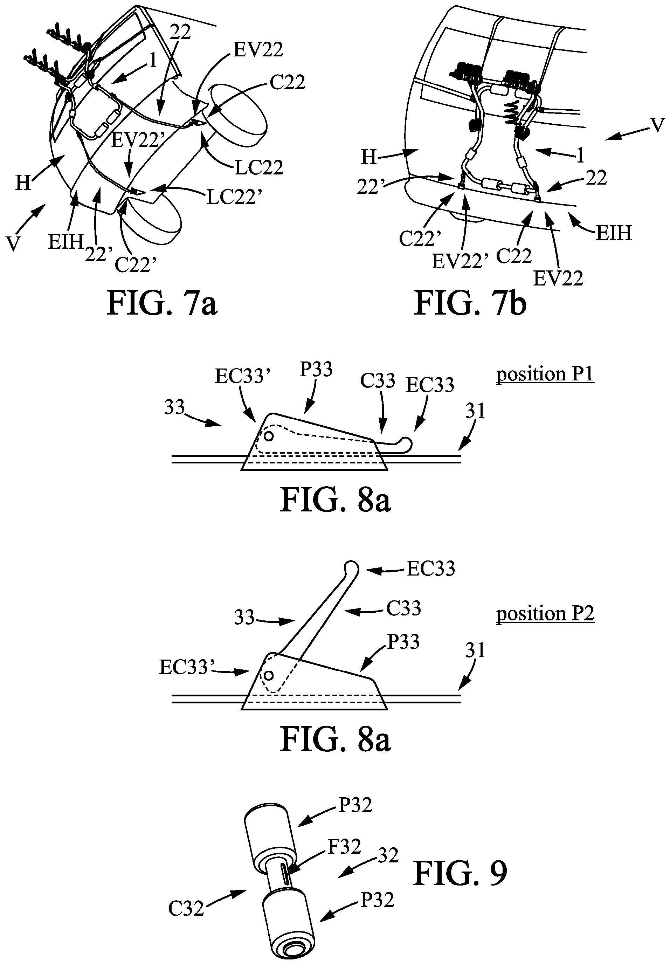

Comme visible sur l'exemple de réalisation de la figure 7b, la deuxième extrémité EV22, EV22' de chaque sangle 22, 22' de la deuxième paire de sangles peut être munie d'un crochet C22, C22', configuré de sorte à venir enserrer le chant inférieur du hayon H.

Alternativement, comme visible sur l'exemple de réalisation de la figure 7a, la deuxième extrémité EV22, EV22' de chaque sangle 22, 22' de la deuxième paire de sangles peut être munie d'un crochet C22, C22', configuré de sorte à venir se fixer dans un logement correspondant LC22, LC22' ménagé sous la caisse du véhicule automobile V, ou sur tout type de moyen d'accrochage ménagé sous la caisse du véhicule automobile V. Ce mode de réalisation peut être privilégié dans le cas où l'extrémité inférieure EIH du hayon H est réalisée en plastique, et risquerait de se détériorer avec l'emploi d'un crochet C22, C22', tel que décrit précédemment.

Selon un mode de réalisation, au moins un élément d'appui 32 est un diabolo comprenant un cylindre C32, sur lequel est ménagée une fente longitudinale F32 destinée être traversée par la sangle transversale 33 en coulissement, ainsi que deux patins souple P32, fixés à chacune des extrémités du cylindre C32.

Un tel élément d'appui 32 est visible par exemple sur l'exemple de réalisation de la figure 9.

La position d'un tel élément d'appui 32 peut ainsi être facilement et rapidement ajustée en faisant coulisser le cylindre C32 le long de la sangle transversale 33, à travers la fente longitudinale F32. De plus, la forme cylindrique desdits éléments d'appui 32 permet à la fois d'assurer un appui optimal sur la face extérieure FE du hayon H, quelle que soit la géométrie de la dite face extérieure FE, et notamment quelle que soit sa courbure. A cet effet, la fente longitudinale F32 peut avantageusement s'étendre selon un plan de symétrie du cylindre C32.

De plus, lesdits patins souples P32, par exemple également de forme cylindrique, et réalisés par exemple en mousse élastomère permettent, en plus d'assurer un appui optimal sur la face extérieure FE du hayon H, de ne pas détériorer la face extérieure du véhicule automobile V, notamment à cause des efforts importants générés par l'appui desdits éléments d'appui 32 sur la face extérieure FE du hayon H.

Afin d'assurer un appui satisfaisant sur la face extérieure FE du hayon H, l'élément d'appui 32, et notamment le cylindre C32 doit avoir une rigidité et un poids en conséquence. A cet effet, ledit cylindre C32 peut avantageusement être réalisé en métal, par exemple en aluminium ou en acier. Avantageusement, et à cet effet, le cylindre C32 peut également être creux.

Selon un mode de réalisation, au moins un moyen de butée mobile 33 comporte :
- une portion de réception R33 configurée pour recevoir en appui la sangle transversale 31,
- une came de serrage C33, monté pivotante sur ladite portion de réception R33, ladite came de serrage C33 pouvant passer d'une première position P1, dans laquelle le moyen de butée mobile 33 est fixé immobile sur la sangle transversale 31 à une deuxième position P2, dans laquelle le moyen de butée mobile 33 peut coulisser sur la sangle transversale 31.

Comme visible sur l'exemple de réalisation de la figure 2, un tel moyen de butée mobile 33, de conception très simple, peut avantageusement être positionné de façon particulièrement rapide et simple à une position désirée sur ladite sangle transversale 31 de sorte à empêcher le déplacement d'un élément d'appui 32 le long de ladite sangle transversale 31, dans au moins un sens, en venant en butée contre ledit élément d'appui 32.

Comme visible sur les exemples de réalisation des figures 8a et 8b, ladite came de serrage C33 peut comporter une portion conformée pour être saisie facilement par un opérateur afin de déplacer ladite came de serrage C33 depuis la position P1 vers la position P2, et inversement, au niveau d'une première extrémité EC33.

Ladite came de serrage C33 peut également comporter une portion sensiblement cylindrique, au niveau d'une deuxième extrémité EC33', conformée de sorte à appuyer sur la sangle transversale 31, lorsque dans la position P2 (figure 8b), afin d'empêcher le déplacement de ladite sangle transversale 31 par rapport audit moyen de butée mobile 33, et de sorte à n'exercer aucun effort sur la sangle transversale 31, lorsque dans la position P1 (figure 8a), afin d'autoriser le déplacement de ladite sangle transversale 31 par rapport audit moyen de butée mobile 33.

Un tel moyen de butée mobile 33 peut avantageusement être réalisé en matériau métallique, au moins partiellement, (ou encore en plastique), afin de ne pas se détériorer trop rapidement au contact des éléments extérieurs au véhicule automobile V.

L'invention concerne également un procédé d'installation d'un porte-vélo amovible 1 selon l'invention sur le hayon H d'un véhicule automobile V, comprenant les étapes :
(a) mise en place de la sangle transversale 31 à l'intérieur du véhicule automobile V,
(b) mise en place des éléments d'appui 32 à proximité de chacune des extrémités latérales ELH, ELH' du hayon H du véhicule automobile V, et maintien en position desdits éléments d'appui 32 par l'intermédiaire des moyens de butée amovibles 33,
(c) fixation de chacune des extrémités E31, E31' de ladite sangle transversale 31 au châssis rigide 10 du porte-vélo amovible 1,
(d) réglage de la longueur de la sangle transversale 31 et ajustement de la position des éléments d'appui 32 et des moyens de butée amovible 33 de sorte que la sangle transversale 31 appuie contre une face intérieure FI du hayon H du véhicule automobile V, et que les éléments d'appui 32 appuient contre une face extérieure FE du hayon H du véhicule automobile V, à proximité des extrémités latérales ELH, ELH' dudit hayon H, afin que le châssis rigide 10 du porte-vélo amovible 1 soit maintenu en appui sur le hayon H du véhicule automobile V, selon une direction DT sensiblement transversale dudit hayon H du véhicule automobile V.

Un tel procédé est particulièrement aisé et rapide à mettre en œuvre afin d'obtenir un maintien optimal du porte-vélo amovible 1 sur le hayon H du véhicule automobile V, selon une direction transversale DT dudit hayon H.

Avantageusement, les étapes d'un tel procédé peuvent être réalisées chronologiquement de (a) à (d).

Alternativement, ces étapes peuvent être réalisées dans un ordre différent sans nuire à la qualité de l'installation du porte-vélo amovible 10 sur le hayon H du véhicule automobile V obtenu grâce à un tel procédé. Par exemple, l'étape (c) peut être effectuée avant l'étape (b).

Comme visible sur l'exemple de réalisation de la figure 3, le hayon H du véhicule automobile V doit être ouvert préalablement à la mise en œuvre de l'étape (a), et peut être refermé dès la fin de cette étape (a), notamment afin de maintenir en position ladite sangle transversale 31 par rapport au hayon H par pincement.

Selon un mode de réalisation, ledit procédé d'installation peut comprendre les étapes :
(e) Fixation de la deuxième extrémité E21V, E21V' de chaque sangle 21, 21' de la première paire de sangles 21, 21' sur le véhicule automobile V, à proximité de l'extrémité supérieure ESH du hayon H,
(f) fixation de la deuxième extrémité E22V, E22V' de chaque sangle 22, 22' de la deuxième paire de sangles 22, 22' sur le véhicule automobile V, à proximité de l'extrémité inférieure EIH du hayon,
(g) fixation de la première extrémité E21C, E21C' de chaque sangle 21, 21' de la première paire de sangles 21, 21' sur le châssis rigide 10,
(h) fixation de la première extrémité E22C, E22C' de chaque sangle 22, 22' de la deuxième paire de sangles 22, 22' sur le châssis rigide 10,
(i) ajustement de la longueur de toutes les sangles 21, 21', 22, 22' de sorte que le porte-vélo amovible 1 se retrouve plaqué et maintenu en appui sur le hayon H du véhicule automobile V, selon une direction longitudinale DL du hayon H du véhicule automobile V.

Ce mode de réalisation convient particulièrement pour un porte-vélo amovible 10 comprenant une première paire de sangles 21, 21' et une deuxième paire de sangles 22, 22', tel que décrit précédemment.

Un tel procédé est particulièrement aisé et rapide à mettre en œuvre afin d'obtenir un maintien optimal du porte-vélo amovible 1 sur le hayon H du véhicule automobile V, selon une direction longitudinale DL dudit hayon H.

Lesdites étapes (e) à (i) peuvent être réalisées avant, après, ou sensiblement simultanément aux étapes (a) à (d) décrites précédemment.

Par ailleurs, ces étapes (e) à (i) peuvent être réalisées chronologiquement dans cet ordre. Alternativement, ces étapes peuvent être réalisées dans un ordre différent sans nuire à la qualité de l'installation du porte-vélo amovible 10 sur le hayon H du véhicule automobile V obtenu grâce à un tel procédé.

Selon un mode de réalisation, au cours de l'étape (e), un crochet C21, C21', fixé au niveau de la deuxième extrémité E21V, E21V' d'au moins une sangle 21, 21' de la première paire de sangles vient se fixer sur le chant supérieur dudit hayon H, ledit crochet C21, C21' venant enserrer ledit chant supérieur du hayon H,
et/ou,
au cours de l'étape (f), un crochet C22, C22' fixé au niveau de la deuxième extrémité E22V, E22V' d'au moins une sangle 22, 22' de la deuxième paire de sangles vient se fixer sur le chant inférieur dudit hayon H, ledit crochet C22, C22' venant enserrer ledit chant supérieur du hayon H,
et/ou,
au cours de l'étape (f), un crochet C22, C22' fixé au niveau de la deuxième extrémité E22V, E22V' d'au moins une sangle 22, 22'de la deuxième paire de sangles vient se fixer dans un logement LC22, LC22' ménagé sous la caisse du véhicule automobile.

Ce mode de réalisation convient particulièrement pour un porte-vélo amovible 10 dont au moins une sangle 21, 21', 22, 22' de la première/deuxième paire de sangles comprend un crochet C21, C21', C22, C22' fixé au niveau de sa deuxième extrémité EV21, EV21', EV22, EV22'.

Selon un mode de réalisation, au cours de l'étape (e), la deuxième extrémité EV21, EV21' d'au moins une sangle 21, 21' de la première paire de sangles est fixée sur une barre de toit BT, BT' ménagée sur le toit T du véhicule automobile V.

Ce mode de réalisation convient particulièrement dans le cas où l'extrémité supérieure ESH du hayon H du véhicule automobile V comporte du plastique, et risquerait de se retrouver endommagé par l'emploi d'un crochet C21, C21' configuré pour venir enserrer le chant supérieur dudit hayon H.

L'invention concerne encore un ensemble comprenant un véhicule automobile V muni d'un hayon H et un porte-vélo amovible 1 selon l'invention, ledit porte-vélo amovible 1 étant fixé au hayon H du véhicule automobile V.

Ladite sangle transversale 31 de longueur réglable, dont chacune des deux extrémités E31, E31' est fixée au châssis rigide 10 de part et d'autre du châssis rigide 10, s'étend alors sensiblement, au moins partiellement, parallèlement à une direction transversale DT du hayon H du véhicule automobile V, à l'intérieur du véhicule automobile V, et vient appuyer contre une face intérieure FI du hayon H du véhicule automobile V.

Les deux éléments d'appui 32, montés coulissant sur la sangle transversale 31 sont bloqués par les deux moyens de butée mobiles 33 bloquant le coulissement de chacun desdits éléments d'appui 32 sur la sangle transversale 31 selon au moins une direction, lesdits éléments d'appui 32 appuyant contre une face extérieure FE du hayon H du véhicule automobile V, à proximité de chacune des extrémités latérales ELH, ELH' du hayon H du véhicule automobile V, lorsque le porte-vélo amovible 1 est fixé audit hayon H du véhicule automobile V assurant le maintien latéral du châssis rigide 10 sur la hayon H.

D'autres modes de réalisation auraient pu être envisagés par l'Homme du métier sans pour autant sortir du cadre de l'invention définie par les revendications ci-après.

### NOMENCLATURE

1. Porte-vélo
10. Châssis rigide
11. Bras de support,
12. Armature centrale,
13. Première partie,
14. Deuxième partie,
15. Patin souple,
2. Moyen de maintien longitudinal
21, 21', 22, 22'. Sangle
B21, B21', B22, B22', B31, B31'. Boucle de serrage,
F21, F21', F22, F22'. Point de fixation,
E21C, E21C', E22C, E22C'. Première extrémité
E21V, E21V', E22V, E2V'. Deuxième extrémité
3. Moyen de maintien transversal
31. Sangle transversale
E31. Première extrémité,
E31'. Deuxième extrémité,
F31, F31'. Point de fixation
32. Elément d'appui,
C32. Cylindre 32,
F32. Fente longitudinale,
P32. Patin souple,
33. Moyen de butée amovible,
C33. Came de serrage,
P33. Portion d'appui,
H. Hayon,
DL. Direction longitudinale,
DT. Direction transversale,
ESH. Extrémité supérieure,
EIH. Extrémité inférieure,
ELH. Extrémité latérale,
FI. Face intérieure,
FE. Face extérieure,
V. Véhicule automobile,
LC22, LC22'. Logement,

## Revendications

1. Porte-vélo amovible (1) destiné à être fixé au hayon (H) d'un véhicule automobile (V) comprenant :
- un châssis (10), rigide, destiné à venir s'appuyer sur le hayon (H) d'un véhicule automobile (V),
- deux bras de support (11) des vélos, parallèles entre eux, fixés au châssis rigide (10) de sorte à faire saillie vers l'extérieur du véhicule automobile (V), une fois le porte-vélo amovible (1) fixé sur le hayon (H) du véhicule automobile (V),
- des moyens de maintien longitudinal (2), assurant le maintien du châssis rigide (10) sur le hayon (H) du véhicule automobile (V) selon une direction longitudinale (DL) du hayon (H) du véhicule automobile (V),
- un moyen de maintien transversal (3) assurant le maintien du châssis rigide (10) sur le hayon (H) du véhicule automobile (V) selon une direction transversale (DT) du hayon (H) du véhicule automobile (V),
**caractérisé en ce que,** ledit moyen de maintien transversal (3) comprend :
- une sangle transversale (31), de longueur réglable, dont chacune des deux extrémités (E31, E31') est fixée au châssis rigide (10) de part et d'autre du châssis rigide (10), destinée à s'étendre, au moins partiellement, sensiblement parallèlement à une direction transversale (DT) du hayon (H) du véhicule automobile (V) à l'intérieur du véhicule automobile (V), et à appuyer contre une face intérieure (FI) du hayon (H) du véhicule automobile (V), et
- deux éléments d'appui (32), montés coulissant sur la sangle transversale (31), et deux moyens de butée mobiles (33) permettant d'empêcher le coulissement de chacun desdits éléments d'appui (32) sur la sangle transversale (31), selon au moins une direction, lesdits éléments d'appui (32) étant configurés pour venir appuyer contre une face extérieure (FE) du hayon (H) du véhicule automobile (V), à proximité de chacune des extrémités latérales (ELH, ELH') du hayon (H) du véhicule automobile (V), lorsque le porte-vélo amovible (1) est fixé audit hayon (H) du véhicule automobile (V) afin d'assurer la maintien latéral du châssis (10) sur la hayon (H).

2. Porte vélo (1) selon la revendication 1 dans lequel les moyens de maintien longitudinal (2) comprennent deux paires de sangles de maintien, de longueur réglable, présentant :
- une première paire, dont les deux sangles (21, 21') sont destinées à s'étendre sensiblement parallèlement, et sont fixées au châssis rigide (10) au niveau d'une première extrémité (E21C, E21C') de chacune desdites sangles (21, 21'), et configurées pour se fixer sur le véhicule automobile (V), à proximité de l'extrémité supérieure (ESH) du hayon (H), au niveau d'une deuxième extrémité (E21V, E21V') de chacune desdites sangles (21, 21'),
- une deuxième paire, dont les deux sangles (22, 22') sont destinées à s'étendre sensiblement parallèlement, et sont fixées au châssis rigide (10) au niveau d'une première extrémité (EC22, EC22') de chacune desdites sangles (22, 22'), et configurées pour se fixer sur le véhicule automobile (V), à proximité de l'extrémité inférieure du hayon (EIH), au niveau d'une deuxième extrémité (EV22, EV22') de chacune desdites sangles (22, 22').

3. Porte-vélo amovible (1) selon la revendication 2 dans lequel un crochet (C21, C21', C22, CC22') est fixé sur au moins une sangle (21, 21', 22, 22') de la première/deuxième paire de sangles, au niveau de la deuxième extrémité (E21V, E21V', E22V, E22V') de ladite sangle (21, 21', 22, 22'), afin d'assurer la fixation de ladite sangle (21, 21', 22, 22') au véhicule automobile (V).

4. Porte-vélo amovible (1) selon l'une des revendications 1 à 3, dans lequel au moins un élément d'appui (32) est un diabolo comprenant un cylindre (C32), sur lequel est ménagée une fente longitudinale (F32) destinée à être traversée par la sangle transversale (31) en coulissement, ainsi que deux patins souples (P32), fixés à chacune des extrémités du cylindre (C32).

5. Porte-vélo amovible selon l'une des revendications 1 à 4, dans lequel au moins un moyen de butée mobile (33) comporte :
- une portion de réception (P33) configurée pour recevoir en appui la sangle transversale (31),
- une came de serrage (C33), monté pivotante sur ladite portion de réception (P33), ladite came de serrage (C33) pouvant passer d'une première position (P1), dans laquelle le moyen de butée mobile (33) est fixé immobile sur la sangle transversale (31) à une deuxième position (P2), dans laquelle le moyen de butée mobile (33) peut coulisser sur la sangle transversale (31).

6. Procédé d'installation d'un porte-vélo amovible (1) selon l'une des revendications 1 à 5 sur le hayon (H) d'un véhicule automobile (V), comprenant les étapes :
(a) mise en place de la sangle transversale (31) à l'intérieur du véhicule automobile (V),
(b) mise en place des éléments d'appui (32) à proximité de chacune des extrémités latérales (ELH, ELH') du hayon (H) du véhicule automobile (V), et maintien en position desdits éléments d'appui (32) par l'intermédiaire des moyens de butée amovibles (33),
(c) fixation de chacune des extrémités (E31, E31') de ladite sangle transversale (31) au châssis rigide (10) du porte-vélo amovible (1),
(d) réglage de la longueur de la sangle transversale (31) et ajustement de la position des éléments d'appui (32) et des moyens de butée amovible (33) de sorte que la sangle transversale (31) appuie contre une face intérieure (FI) du hayon (H) du véhicule automobile (V), et que les éléments d'appui (32) appuient contre une face extérieure (FE) du hayon (H) du véhicule automobile (V), à proximité des extrémités latérales (ELH, ELH') dudit hayon (H), afin que le châssis rigide (10) du porte-vélo amovible (1) soit maintenu en appui sur le hayon (H) du véhicule automobile (V), selon une direction sensiblement transversale (DT) dudit hayon (H) du véhicule automobile (V).

7. Procédé d'installation selon la revendication 6 convenant pour l'installation d'un porte-vélo amovible (1) selon la revendication 2, comprenant les étapes :
(e) Fixation de la deuxième extrémité (EV21, EV21') de chaque sangle (21, 21') de la première paire de sangles sur le véhicule automobile (V), à proximité de l'extrémité supérieure (ESH) du hayon (H),
(f) fixation de la deuxième extrémité (EV22, EV22') de chaque sangle (22, 22') de la deuxième paire de sangles sur le véhicule automobile (V), à proximité de l'extrémité inférieure (EIH) du hayon (H),
(g) fixation de la première extrémité (EC21, EC21') de chaque sangle (21, 21') de la première paire de sangles sur le châssis rigide (10);
(h) fixation de la première extrémité (EC22, EC22') de chaque sangle (22, 22') de la deuxième paire de sangles sur le châssis rigide (10);
(i) ajustement de la longueur de toutes les sangles (21, 21', 22, 22') de sorte que le porte-vélo amovible (1) se retrouve plaqué et maintenu en appui sur le hayon (H) du véhicule automobile (V), selon une direction longitudinale (DL) du hayon (H) du véhicule automobile (V).

8. Procédé d'installation selon la revendication 7 convenant pour un porte-vélo amovible (1) selon la revendication 3, dans lequel, au cours de l'étape (e), un crochet (C21, C21') fixé au niveau de la deuxième extrémité (EV21, EV21') d'au moins une sangle (21, 21') de la première paire de sangles vient se fixer sur le chant supérieur dudit hayon (H), ledit crochet (C21, C21') venant enserrer ledit chant supérieur du hayon (H),
et/ou,
au cours de l'étape (f), un crochet (C22, C22'), fixé au niveau de la deuxième extrémité (EV22, EV22') d'au moins une sangle (22, 22') de la deuxième paire de sangles, vient se fixer sur le chant inférieur dudit hayon (H), ledit crochet (C22, C22') venant enserrer ledit chant supérieur du hayon (H),
et/ou,
au cours de l'étape (f), un crochet (C22, C22') fixé au niveau de la deuxième extrémité (EV22, EV22') d'au moins une sangle (22, 22') de la deuxième paire de sangles vient se fixer dans un logement (LC22, LC22') ménagé sous la caisse du véhicule automobile (V).

9. Procédé selon la revendication 7 ou 8, dans lequel, au cours de l'étape (e), la deuxième extrémité (EV21, EV21') d'au moins une sangle (21, 21') de la première paire de sangles est fixée sur une barre de toit (BT, BT') ménagée sur le toit (T) du véhicule automobile (V).

10. Ensemble comprenant un véhicule automobile (V) muni d'un hayon (H) et un porte-vélo amovible (1) selon l'une des revendications 1 à 5, ledit porte-vélo (1) amovible étant fixé au hayon (H) du véhicule automobile (V), et dans lequel :
- ladite sangle transversale de longueur réglable, dont chacune des deux extrémités (E31, E31') est fixée au châssis rigide (10) de part et d'autre du châssis rigide (10), s'étend, au moins partiellement, sensiblement parallèlement à une direction transversale (DT) du hayon (H) du véhicule automobile (V) à l'intérieur du véhicule automobile (V), et vient appuyer contre une face intérieure (FI) du hayon (H) du véhicule automobile (V), et
- les deux éléments d'appui (32), montés coulissant sur la sangle transversale (31), sont bloqués par les deux moyens de butée mobiles (33), bloquant le coulissement de chacun desdits éléments d'appui (32) sur la sangle transversale (31), selon au moins une direction, lesdits éléments d'appui (32) appuyant contre une face extérieure (FE) du hayon (H) du véhicule automobile (V), à proximité de chacune des extrémités latérales (ELH, ELH') du hayon (H) du véhicule automobile (V), lorsque le porte-vélo amovible (1) est fixé audit hayon (H) du véhicule automobile (V), assurant le maintien latéral du châssis (10) sur le hayon (H).

## Patentansprüche

1. Abnehmbarer Fahrradträger (1), der zum Befestigen an der Heckklappe (H) eines Kraftfahrzeugs (V) vorgesehen ist, umfassend:
- ein starres Gestell (10), welches vorgesehen ist, um sich an der Heckklappe (H) eines Kraftfahrzeugs (V) abzustützen,
- zwei zueinander parallele Fahrradtragarme (11), welche an dem starren Gestell (10) so befestigt sind, dass sie zur Außenseite des Kraftfahrzeugs (V) vorstehen, sobald der abnehmbare Fahrradträger (1) an der Heckklappe (H) des Kraftfahrzeugs (V) befestigt ist,
- Längshaltemittel (2), welche die Halterung des starren Gestells (10) an der Heckklappe (H) des Kraftfahrzeugs (V) entlang einer Längsrichtung (DL) der Heckklappe (H) des Kraftfahrzeugs (V) sicherstellen,
- Querhaltemittel (3), welche die Halterung des starren Gestells (10) auf der Heckklappe (H) des Kraftfahrzeugs (V) entlang einer Querrichtung (DT) der Heckklappe (H) des Kraftfahrzeugs (V) sicherstellen,
**dadurch gekennzeichnet, dass** die besagten Querhaltemittel (3) umfassen:
- einen Querriemen (31) mit einstellbarer Länge, von dem jedes der beiden Enden (E31, E31') auf dem starren Gestell (10) auf beiden Seiten des starren Rahmens (10) befestigt ist, der vorgesehen ist, um sich, zumindest teilweise im Wesentlichen parallel zu einer Querrichtung (DT) der Heckklappe (H) des Kraftfahrzeugs (V) im Innern des Kraftfahrzeugs (V) zu erstrecken, und sich gegen eine Innenfläche (FI) der Heckklappe (H) des Kraftfahrzeugs (V) abzustützen, und
- zwei Stützelemente (32), die verschiebbar am Querbalken (31) montiert sind, und zwei bewegliche Anschlagmittel (33), die es ermöglichen, das Verrutschen jedes der Stützelemente (32) am Querbalken (31), entlang mindestens einer Richtung zu verhindern, wobei die besagten Stützelemente (32) so ausgelegt sind, dass sie sich gegen eine Außenfläche (FE) der Heckklappe (H) des Kraftfahrzeugs (V) nahe jedem der seitlichen Enden (ELH, ELH') der Heckklappe (H) des Kraftfahrzeugs (V) abstützen, wenn der abnehmbare Fahrradträger (1) an der Heckklappe (H) des besagten Kraftfahrzeugs (V) befestigt ist, um eine seitliche Abstützung des Gestells (10) sicherzustellen.

2. Fahrradträger (1) nach Patentanspruch 1, bei welchem die Längshaltemittel (2) zwei Paare von Haltegurten mit einstellbarer Länge umfassen, welche aufweisen:
- ein erstes Paar, dessen zwei Gurte (21, 21') vorgesehen sind, um sich im Wesentlichen parallel zu erstrecken und an dem starren Rahmen (10) an einem ersten Ende (E21C, E21C') jedes der besagten Gurte (21, 21') befestigt zu sein, und eingerichtet sind, um auf dem Kraftfahrzeug (V) nahe dem oberen Ende (ESH) der Heckklappe (H) an einem zweiten Ende (E21V, E21V') jedes der besagten Gurte (21, 21') befestigt zu werden,
- ein zweites Paar, dessen zwei Bänder (22, 22') vorgesehen sind, um sich im Wesentlichen parallel zu erstrecken und an einem ersten Ende (EC22, EC22') jedes der besagten Gurte (22, 22') am starren Rahmen (10) befestigt sind, und eingerichtet sind, um sich am Kraftfahrzeug (V) in der Nähe des unteren Endes der Heckklappe (EIH) an einem zweiten Ende (EV22, EV22') jedes der besagten Gurtes (22, 22') zu befestigen.

3. Abnehmbarer Fahrradträger (1) gemäß dem Patentanspruch 2, bei welchem ein Haken (C21, C21', C22, CC22') an mindestens einem Gurt (21, 21', 22, 22') des ersten/zweiten Gurtpaares an dem zweiten Ende (E21V, E21V', E22V, E22V') des besagten Gurtes (21, 21', 22, 22') befestigt ist, um die Befestigung des besagten Gurtes (21, 21', 22, 22') am Kraftfahrzeug (V) sicherzustellen.

4. Abnehmbarer Fahrradträger (1) gemäß einem der Patentansprüche 1 bis 3, bei welchem mindestens ein Stützelement (32), ein einen Zylinder (C32) umfassender Diabolo ist, auf welchem ein Längsschlitz (F32), der dazu bestimmt ist, von dem Quergurt (31) beweglich durchkreuzt zu werden, sowie zwei flexible Bremsbeläge (P32), welche an jedem der Enden des Zylinders (C32) befestigt sind, vorgesehen sind.

5. Abnehmbarer Fahrradträger gemäß einem der Patentansprüche 1 bis 4, bei welchem mindestens ein bewegliches Anschlagmittel (33) umfasst:
- einen Aufnahmeabschnitt (P33), welcher zum Aufnehmen in Anlage des Quergurtes (31) ausgelegt ist,
- eine Klemmnocke (C33), welche schwenkbar auf dem besagten Aufnahmeabschnitt (P33) angebracht ist, wobei die besagte Klemmnocke (C33) von einer ersten Stellung (P1), in welcher das bewegliche Anschlagmittel (33) bewegungslos an dem Quergurt (31) befestigt ist, in eine zweite Stellung (P2), in welcher das bewegliche Anschlagmittel (33) auf dem Quergurt (31) gleiten kann, übergehen kann.

6. Verfahren zum Installieren eines abnehmbaren Fahrradträgers (1) gemäß einem der Ansprüche 1 bis 5 an der Heckklappe (H) eines Kraftfahrzeugs (V), umfassend die Schritte:
(a) Platzieren des Quergurts (31) im Inneren des Kraftfahrzeugs (V),
(b) Platzieren der Stützelemente (32) in der Nähe jedes der Querenden (ELH, ELH') der Heckklappe (H) des Kraftfahrzeugs (V), und Instellunghalten der besagten Stützelemente (32) vermittels der abnehmbaren Anschlagmöglichkeiten (33),
(c) Befestigen jedes der Enden (E31, E31') des besagten Quergurtes (31) am starren Gestell (10) des abnehmbaren Fahrradträgers (1),
(d) Einstellen der Länge des Quergurtes (31) und Anpassen der Stellung der Stützelemente (32) und der abnehmbaren Anschlagmittel (33), sodass der Quergurt (31) gegen eine Innenfläche (FI) der Heckklappe (H) des Kraftfahrzeugs (V) drückt, und dass die Stützelemente (32) gegen eine Außenfläche (FE) der Heckklappe (H) des Kraftfahrzeugs (V) in der Nähe der Querenden (ELH, ELH') der besagten Heckklappe (H) drücken, so dass das starre Gestell (10) des abnehmbaren Fahrradträgers (1) entlang einer im wesentlichen Querrichtung (DT) der besagten Heckklappe (H) des Kraftfahrzeugs (V) im Anschlag auf der Heckklappe (H) des Kraftfahrzeugs (V) gehalten wird.

7. Verfahren zum Installieren gemäß dem Patentanspruch 6, welches zur Installation eines abnehmbaren Fahrradträgers (1) gemäß dem Patentanspruch 2 geeignet ist, umfassend die Schritte: (e) Anbringen des zweiten Endes (EV21, EV21') jedes Gurtes (21, 21') des ersten Gurtpaares an dem Kraftfahrzeug (V), in der Nähe des oberen Endes (ESH) der Heckklappe (H),
(f) Anbringen des zweiten Endes (EV22, EV22') jedes Gurtes (22, 22') des zweiten Gurtpaares an dem Kraftfahrzeug (V), in der Nähe des unteren Endes (EIH) der Heckklappe (H),
(g) Anbringen des ersten Endes (EC21, EC21') jedes Gurtes (21, 21') des ersten Gurtpaares an dem starren Gestell (10);
(h) Anbringen des ersten Endes (EC22, EC22') jedes Gurtes (22, 22') des zweiten Gurtpaares an dem festen Gestell (10);
(i) Einstellen der Länge aller Gurte (21, 21', 22, 22'), so dass der abnehmbare Fahrradträger (1) abgeflacht ist und auf der Heckklappe (H) des Kraftfahrzeugs (V) abgestützt ist, entlang einer Längsrichtung (DL) der Heckklappe (H) des Kraftfahrzeugs (V).

8. Verfahren zur Installation gemäß dem Patentanspruch 7, welches für einen abnehmbaren Fahrradträger (1) gemäß dem Patentanspruch 3 geeignet ist, bei welchem, während des Schrittes (e), ein Haken (C21, C21'), welcher an dem zweiten Ende (EV21, EV21') mindestens eines Gurtes (21, 21') des ersten Gurtpaares befestigt ist, an der Oberkante der besagten Heckklappe (H) befestigt ist, wobei der besagte Haken (C21, C21') die Oberkante der Heckklappe (H) umschließt,
und/oder,
während des Schrittes (f) ein Haken (C22, C22'), welcher bei dem zweiten Ende (EV22, EV22') mindestens eines Gurtes (22, 22') des zweiten Gurtpaares angebracht ist, sich an der Unterkante der besagten Heckklappe (H) festmacht, wobei der besagte Haken (C22, C22') die besagte Unterkante der Heckklappe (H) umschließt,
und/oder,
während des Schrittes (f) ein Haken (C22, C22'), welcher bei dem zweiten Ende (EV22, EV22') mindestens eines Gurtes (22, 22') des zweiten Gurtpaares angebracht ist, sich in einem Gehäuse (LC22, LC22'), welches unter der Karosserie des Kraftfahrzeugs (V) vorgesehen ist, befestigt.

9. Verfahren gemäß dem Patentanspruch 7 oder 8, bei welchem, während des Schritts (e), das besagte Ende (EV21, EV21') mindestens eines Gurtes (21, 21') des ersten Gurtpaares an einer Dachstange (BT, BT'), die auf dem Dach (T) des Kraftfahrzeugs (V) vorgesehen ist, befestigt wird.

10. Anordnung, umfassend ein Kraftfahrzeug (V), welches mit einer Heckklappe (H) und einem abnehmbaren Fahrradträger (1) gemäß einem der Patentansprüche 1 bis 5 versehen ist, wobei der besagte abnehmbare Fahrradträger (1) an der Heckklappe (H) des Kraftfahrzeugs (V) befestigt ist, und bei welcher:
- der besagte Quergurt mit einstellbarer Länge, von dem jedes der beiden Enden (E31, E31') am starren Gestell (10) an beiden Seiten des starren Gestellt (10) befestigt ist, sich, zumindest teilweise, im Wesentlichen parallel zu einer Querrichtung (DT) der Heckklappe (H) des Kraftfahrzeugs (V) im Innern des Kraftfahrzeugs (V) erstreckt und gegen eine Innenfläche (FI) der Heckklappe (H) des Kraftfahrzeugs (V) drückt, und
- die beiden Stützelemente (32), welche verschiebbar an dem Quergurt (31) befestigt sind, durch die beiden beweglichen Anschlagmittel (33), welche das Gleiten jedes der besagten Stützelemente (32) auf dem Quergurt (31) blockieren entlang mindestens einer Richtung, blockiert werden, wobei die besagten Stützelemente (32) gegen eine Außenfläche (FE) der Heckklappe (H) des Kraftfahrzeugs (V) in der Nähe jedes der Querenden (ELH, ELH') der Heckklappe (H) des Kraftfahrzeug (V) drücken, wenn der abnehmbare Fahrradträger (1) an der besagten Heckklappe (H) des Kraftfahrzeugs (V) befestigt ist, um auf diese Weise die seitliche Abstützung des Gestells (10) auf der Heckklappe (H) sicherzustellen.

## Claims

1. A removable bicycle carrier (1) intended to be attached to the tailgate (H) of a motor vehicle (V) comprising:
- a rigid frame (10) intended to bear on the tailgate (H) of a motor vehicle (V),
- two arms (11) for supporting the bikes, parallel to each other, attached to the rigid frame (10) so as to protrude towards the outside of the motor vehicle (V), once the removable bicycle carrier (1) is attached on the tailgate (H) of the motor vehicle (V),
- longitudinal holding means (2), holding the rigid frame (10) on the tailgate (H) of the motor vehicle (V) in a longitudinal direction (DL) of the tailgate (H) of the motor vehicle (V),
- a transverse holding means (3) holding the rigid frame (10) on the tailgate (H) of the motor vehicle (V) in a transverse direction (DT) of the tailgate (H) of the motor vehicle (V),
**characterised in that,** said transverse holding means (3) comprises:
- a transverse strap (31), of adjustable length, each of the two ends (E31, E31') of which is attached to the rigid frame (10) on either side of the rigid frame (10), intended to at least partially extend substantially parallel to a transverse direction (DT) of the tailgate (H) of the motor vehicle (V) inside the motor vehicle (V), and to bear against an inner face (FI) of the tailgate (H) of the motor vehicle (V), and
- two bearing elements (32), slidably mounted on the transverse strap (31), and two movable stop means (33) allowing to prevent the sliding of each of said bearing elements (32) on the transverse strap (31), in at least one direction, said bearing elements (32) being configured to bear against an outer face (FE) of the tailgate (H) of the motor vehicle (V), in the proximity of each of the lateral ends (ELH , ELH') of the tailgate (H) of the motor vehicle (V), when the removable bicycle carrier (1) is attached to said tailgate (H) of the motor vehicle (V) in order to laterally hold the frame (10) on the tailgate (H).

2. The bike carrier (1) according to claim 1 wherein the longitudinal holding means (2) comprise two pairs of holding straps, of adjustable length, having:
- a first pair, the two straps (21, 21') of which are intended to extend substantially parallel, and are attached to the rigid frame (10) at a first end (E21C, E21C') of each of said straps (21, 21'), and configured to attach on the motor vehicle (V), in the proximity of the upper end (ESH) of the tailgate (H), at a second end (E21V, E21V') of each of said straps (21, 21'),
- a second pair, the two straps (22, 22') of which are intended to extend substantially parallel, and are attached to the rigid frame (10) at a first end (EC22, EC22') of each of said straps (22, 22'), and configured to attach on the motor vehicle (V), in the proximity of the lower end of the tailgate (EIH), at a second end (EV22, EV22') of each of said straps (22, 22').

3. The removable bike carrier (1) according to claim 2 wherein a hook (C21, C21', C22, CC22') is attached on at least one strap (21, 21', 22, 22') of the first/second pair of straps, at the second end (E21V, E21V', E22V, E22V') of said strap (21, 21', 22, 22'), in order to attach said strap (21, 21', 22, 22') to the motor vehicle (V).

4. The removable bike carrier (1) according to one of claims 1 to 3, wherein at least one bearing element (32) is a diabolo comprising a cylinder (C32), on which is arranged a longitudinal slot (F32) intended to be traversed by the sliding transverse strap (31), as well as two flexible pads (P32), attached to each of the cylinder (C32) ends.

5. The removable bicycle carrier according to one of claims 1 to 4, wherein at least one movable stop means (33) includes:
- a receiving portion (P33) configured to bearingly receive the transverse strap (31),
- a clamping cam (C33), pivotally mounted on said receiving portion (P33), said clamping cam (C33) being able to switch from a first position (P1), wherein the movable stop means (33) is attached in a stationary manner on the transverse strap (31) to a second position (P2), wherein the movable stop means (33) can slide on the transverse strap (31).

6. A method for installing a removable bicycle carrier (1) according to one of claims 1 to 5 on the tailgate (H) of a motor vehicle (V), comprising the steps:
(a) placing the transverse strap (31) inside the motor vehicle (V),
(b) placing bearing elements (32) in the proximity of each of the lateral ends (ELH, ELH') of the tailgate (H) of the motor vehicle (V), and holding said bearing elements (32) in position through the removable stop means (33),
(c) attaching each end (E31, E31') of said transverse strap (31) to the rigid frame (10) of the removable bicycle carrier (1),
(d) adjusting the length of the transverse strap (31) and adjusting the position of the bearing elements (32) and of the removable stop means (33) so that the transverse strap (31) bears against an inner face (FI) of the tailgate (H) of the motor vehicle (V), and that the bearing elements (32) bear against an outer face (FE) of the tailgate (H) of the motor vehicle (V), in the proximity of the lateral ends (ELH, ELH') of said tailgate (H), so that the rigid frame (10) of the removable bicycle carrier (1) is held bearing on the tailgate (H) of the motor vehicle (V), in a substantially transverse direction (DT) of said tailgate (H) of the motor vehicle (V).

7. The installation method according to claim 6 suitable for the installation of a removable bicycle carrier (1) according to claim 2, comprising the steps:
(e) attaching the second end (EV21, EV21') of each strap (21, 21') of the first pair of straps on the motor vehicle (V), in the proximity of the upper end (ESH) of the tailgate (H),
(f) attaching the second end (EV22, EV22') of each strap (22, 22') of the second pair of straps on the motor vehicle (V), in the proximity of the lower end (EIH) of the tailgate (H),
(g) attaching the first end (EC21, EC21') of each strap (21, 21') of the first pair of straps on the rigid frame (10);
(h) attaching the first end (EC22, EC22') of each strap (22, 22') of the second pair of straps on the rigid frame (10);
(i) adjusting the length of all the straps (21, 21', 22, 22') so that the removable bicycle carrier (1) is pressed and bearing on the tailgate (H) of the motor vehicle (V), in a longitudinal direction (DL) of the tailgate (H) of the motor vehicle (V).

8. The installation method according to claim 7 suitable for a removable bicycle carrier (1) according to claim 3, wherein, during step (e), a hook (C21, C21') attached at the second end (EV21, EV21') of at least one strap (21, 21') of the first pair of straps attaches on the upper edge of said tailgate (H), said hook (C21, C21') enclosing said upper edge of the tailgate (H),
and/or,
during step (f), a hook (C22, C22'), attached at the second end (EV22, EV22') of at least one strap (22, 22') of the second pair of straps, is attached on the lower edge of said tailgate (H), said hook (C22, C22') enclosing said upper edge of the tailgate (H), and/or,
during step (f), a hook (C22, C22') attached at the second end (EV22, EV22') of at least one strap (22, 22') of the second pair of straps attaches in a housing (LC22, LC22') arranged under the body of the motor vehicle (V).

9. The method according to claim 7 or 8, wherein, during step (e), the second end (EV21, EV21') of at least one strap (21, 21') of the first pair of straps is attached on a roof bar (BT, BT') arranged on the roof (T) of the motor vehicle (V).

10. An assembly comprising a motor vehicle (V) provided with a tailgate (H) and a removable bicycle carrier (1) according to one of claims 1 to 5, said removable bicycle carrier (1) being attached to the tailgate (H) of the motor vehicle (V), and wherein:
- said transverse strap of adjustable length, each of the two ends (E31, E31') of which is attached to the rigid frame (10) on either side of the rigid frame (10), at least partially, extends substantially parallel to a transverse direction (DT) of the tailgate (H) of the motor vehicle (V) inside the motor vehicle (V), and bears against an inner face (FI) of the tailgate (H) of the motor vehicle (V), and
- the two bearing elements (32), slidably mounted on the transverse strap (31), are blocked by the two movable stop means (33), blocking the sliding of each of said bearing elements (32) on the transverse strap (31), in at least one direction, said bearing elements (32) bearing against an outer face (FE) of the tailgate (H) of the motor vehicle (V), in the proximity of each of the lateral ends (ELH, ELH') of the tailgate (H) of the motor vehicle (V), when the removable bicycle carrier (1) is attached to said tailgate (H) of the motor vehicle (V), laterally holding the frame (10) on the tailgate (H).
